**Europäisches Patentamt**

**European Patent Office**

**Office européen des brevets**

(11) Veröffentlichungsnummer: **0 271 855**
**A1**

# (12) EUROPÄISCHE PATENTANMELDUNG

(21) Anmeldenummer: 87118454.5

(22) Anmeldetag: 12.12.87

(51) Int. Cl.⁴ **B21J 15/50**

(30) Priorität: 15.12.86 DE 3642775

(43) Veröffentlichungstag der Anmeldung:
**22.06.88 Patentblatt 88/25**

(84) Benannte Vertragsstaaten:
**DE ES FR GB IT NL SE**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Schmid, Klaus
Lange Gasse 5
D-8432 Beilngries(DE)**

(54) **Einrichtung zur Entfernung von Nieten.**

(57) Die Erfindung bezieht sich auf eine Einrichtung zur Entfernung von Nieten oder ähnlichen Befestigungselementen in eingebautem Zustand, bei der ein YAG-Hochleistungslaser zum Abschneiden der Nietkopfflanken eingesetzt wird. Der Laserstrahl ist max. 0,1 mm stark und wird über eine Optik kreisförmig geführt, wobei der Kreisdurchmesser und die Eindringtiefe geregelt werden. Die Übertragung des Laserstrahls erfolgt über einen flexiblen Lichtleiter. Ausführungsbeispiele sind beschrieben und in den Figuren der Zeichnung fixiert.

FIG. 1

## Einrichtung zur Entfernung von Nieten

Die Erfindung bezieht sich auf eine Einrichtung zur Entfernung von Nieten oder ähnlichen Befestigungselementen gemäß dem Gattungsbegriff des Anspruchs 1.

Bei Reparatur-und Nachrüstungsarbeiten tritt immer wieder das Problem der Entfernung von Nieten auf, die so zu entfernen sind, daß die miteinander verbundenen Bauelemente nicht beschädigt werden. Hierzu sind eine Reihe von Verfahren und Vorrichtungen entwickelt worden - wie sie beispielsweise die US-PS 3 620 635 offenbart - die auf dem Prinzip der "Nietaufbohrung" beruhen. Hierzu sind teuere Spezialbohrer entwickelt worden die jedoch einem hohen Verschleiß unterworfen sind, außerdem sehr arbeitsintensiv sind und trotzdem häufig noch die miteinander verbundenen Bauteile beschädigen.

Der vorliegenden Erfindung liegt die Aufgabe zugrunde, eine Einrichtung der eingangs genannten Art zu schaffen, die nicht nur die Nachteile des Standes der Technik beseitigt, sondern eine berührungslose Nietentfernung ohne Beschädigung der miteinander verbundenen Elemente ermöglicht.

Diese Aufgabe wird durch die im Anspruch 1 aufgeführten Maßnahmen gelöst. In den Unteransprüchen sind vorteilhafte Ausgestaltungen und Weiterbildungen angegeben und in der nachfolgenden Beschreibung ist die Erfindung an Ausführungsbeispielen erläutert, die in den Figuren der Zeichnung skizziert sind. Es zeigen.

Fig. 1 ein Teilstück von zwei mittels Nieten miteinander verbundenen Werkstücken, dessen eine Niete von einem Laserstrahl bearbeitet wird,

Fig. 1a eine Draufsicht auf den Nietkopf in eingebautem Zustand,

Fig. 1b eine Draufsicht auf den durch Laserbestrahlung bearbeiteten Nietkopf mit den abgetrennten Nietkopfflanken,

Fig. 2 eine Schemaskizze einer handgeführten Nietentfernungseinrichtung,

Fig. 3 eine Schemaskizze eines Ausführungsbeispieles einer automatischen, computergesteuerten Nietentfernungseinrichtung,

Fig. 4 ein Blockschaltbild der Programmsteuerung für das Ausführungsbeispiel gemäß Fig. 3.

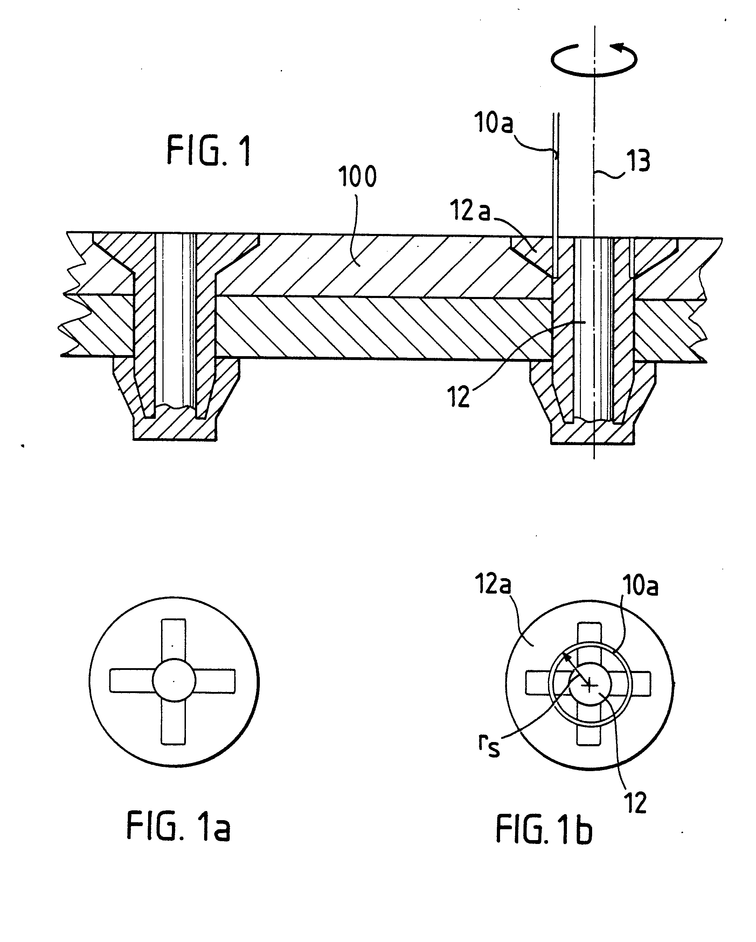

Wie aus den Fig. 1 bis 1b hervorgeht, wird gemäß dem allgemeinen Erfindungsgedanken der Strahl 10a eines YAG-Hochleistungslasers zum Abschneiden der Nietkopfflanken 12a verwendet, wobei dieser Laserstrahl 10a über eine Optik kreisförmig geführt wird und der entsprechende Kreisradius $r_s$ sowie die Eindringtiefe geregelt werden, wie nachstehend an Ausführungsbeispielen erläutert wird. Durch das berührungslose Herausschneiden der Nietkopfflanken 12a mittels des Laserstrahls 10a eines YAG-Hochleistungslasers 10 wird jegliche Beschädigung des Bauelementes 100 vermieden. Bei einem YAG-Hochleistungslaser von 0,5 bis 1,0 KW beträgt bei Stahl-Nieten die Einwirkzeit des Laserstrahls ca. 10 Sekunden. Das Nietmaterial an der Schnittlinie verdampft sofort ohne daß auf die umgebende Struktur - also das Bauelement 100 - eine thermische Belastung auftritt. Sind die Nietkopfflanken entsprechend dem Nietdurchmesser abgetrennt, dann fällt der Nietschaft in Pfeilrichtung aus der Verbindung heraus bzw. kann problem-und aufwandslos ausgestoßen werden.

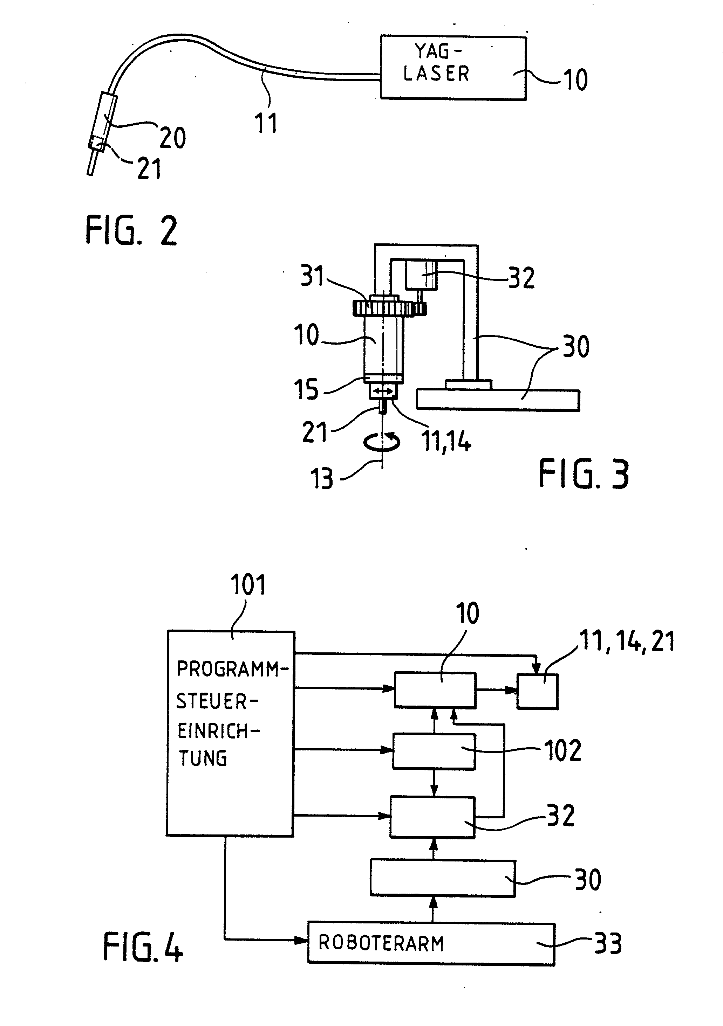

In der Fig. 2 ist ein einfaches Ausführungsbeispiel für eine handgeführte Nietentfernungseinrichtung skizziert. Im wesentlichen setzt sich diese aus dem YAG-Hochleistungslaser 10, einem flexiblen Lichtleiterkabel 11 und einem Handstück 20 zusammen, wobei letzteres sowohl die Fokussieroptik 21 als auch die üblichen Kühl- und Schutzeinrichtungen enthält, um beispielsweise den Laserstrahl 11 in seiner vollen Stärke erst einzuschalten, wenn er einen bestimmten, kleinen Abstand zum Werkstück eingenommen hat. Solche Handgriffe sind durch die Anmelderin beispielsweise für medizinische Applikatoren bekannt geworden (P 33 35 584.3-35 und P 33 35 696.3-35). Diesem einfachen mobilen Gerät wird je nach Anwendungsfall eine Ständervorrichtung zugeordnet, die das Handstück 20 aufnimmt und in jedem frei wählbaren Kreisradius senkrecht zum Nietkopf bzw. dessen Flanken führt.

Die Fig. 3 skizziert eine weitere Ausführungsform der vorgeschlagenen Einrichtung. Hier ist der flexible Lichtleiter 11 des YAG-Hochleistungslasers 10 mit seiner Optik 21 in einem Führungsgehäuse 14 angeordnet, das in einer Halterung 15 am Gehäuse des Lasers zur Einstellung des Schneidradius $r_s$ verschiebbar gelagert ist und der Laser über einen von einem Motor 32 angetriebenen Drehkranz 31 auf einer Plattform 30 montiert ist, die mit einem Roboterarm oder einer sonstigen Führungseinrichtung 33 in Verbindung gebracht werden kann. Hierbei kann die Einrichtung mit einer eigenen Programmsteuereinrichtung 101 ausgestattet sein oder das Bearbeitungsprogramm wird der Programmsteuereinrichtung des Roboters bzw. des Roboterarmes 33 eingegeben.

Die Fig. 4 zeigt ein schematisches Blockschaltbild der Programmsteuereinrichtung 101, wobei dieser eine Zeitschalteinrichtung 102 bzw. ein Zähler zugeordnet ist, die bzw. der die Drehgeschwindigkeit des Motors 32 steuert und außerdem die Einschaltzeiten des Lasers 10 zur Erreichung bestimmter Eindringtiefen. Natürlich sind andere Ausführungsbeispiele für die Lasestrahlführung im Sinne der Erfindung denkbar.

Wesentlich ist, daß diese Ausführungsbeispiele eine Laserstrahlführung erlauben, die in einstellbaren Kreisformen radiusgerecht die Nietkopfflanken abtrennt.

Damit ist eine Einrichtung geschaffen, mit der Reparaturen und Nachrüstungen von Nietverbindungen sowohl in der Arbeitszeit, als auch im Materialbedarf optimiert werden. Die bisher angefallenen Kosten für den Bohrerbedarf und die Bohrernachschleifung entfallen völlig, die Arbeitszeit und damit die Montage-und Demontagekosten werden ganz erheblich verkürzt und eine Beschädigung des bearbeiteten Bauelementes tritt nicht auf. Die vorgeschlagenen Einrichtungen eignen sich auch für Bolzen-und sonstige Steckverbindungen.

## Ansprüche

1. Einrichtung zur Entfernung von Nieten oder ähnlichen Befestigungselementen in eingebautem Zustand, dadurch **gekennzeichnet,** daß mittels des von einem flexiblen Lichtleiter (11) eines YAG-Hochleistungslasers (10) übertragenen Laserstrahls (10a) die Nietkopfflanken (12a) abgetrennt werden, wobei der Lichtleiter von Hand geführt oder - mit von der Mittelachse (13) einstellbaren Abständen -fixierbar und drehbar gelagert ist oder der Laserstrahl (10a) über eine Optik in einstellbaren Kreisformen und Eindringtiefen geführt wird.

2. Einrichtung nach Anspruch 1, dadurch **gekennzeichnet,** daß der flexible Lichtleiter (11) des YAG-Hochleistungslasers (10) an der Strahlausgangsseite mit einem die Optik (21) tragenden Handführungsstück (20) versehen ist, das mit Kühl-sowie Strahlein-und -ausschalteinrichtungen versehen ist.

3. Einrichtung nach Anspruch 1, dadurch **gekennzeichnet,** daß der flexible Lichtleiter (11) des YAG-Hochleistungslasers (10) mit seiner Optik (21) in einem Führungsgehäuse (14) angeordnet ist, das in seiner Halterung (15) am Gehäuse des YAG-Hochleistungslasers (10) zur Einstellung des Schneidradius ($r_s$) verschiebbar angeordnet ist und der YAG-Hochleistungslaser über einen, von einem Motor (32) angetriebenen Drehkranz (31) auf einer Plattform (30) montiert ist, die mit einem Roboterarm oder sonstiger Führungseinrichtung (33) verbunden ist.

4. Einrichtung nach den Ansprüchen 1 bis 3, dadurch **gekennzeichnet,** daß der Laserstrahl (10a) mittels einer Optik (21) auf eine Maximalstärke von 0,1 mm fokussierbar ist und über diese Optik (21) kreisförmig führbar ist.

5. Einrichtung nach den Ansprüchen 1 bis 4, dadurch **gekennzeichnet,** daß die Funktionselemente (10, 11, 14, 21, 30, 32) der Einrichtung von einer externen Programmsteuereinrichtung (101) gesteuert werden.

# FIG. 1

# FIG. 1a

# FIG. 1b

10 175

FIG. 2

FIG. 3

FIG.4

10 175

**Europäisches Patentamt**

# EUROPÄISCHER RECHERCHENBERICHT

Nummer der Anmeldung

| | EINSCHLÄGIGE DOKUMENTE | | EP 87118454.5 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| Y | US - A - 4.461 947 (WARD)<br>* Fig. 1,3,4 *<br>-- | 1,3 | B 21 J 15/50 | |
| Y | US - A - 4 564 736 (JONES et al.)<br>* Fig. 1,3 *<br>-- | 1,3 | | |
| A | US - A - 4 624 405 (NEWELL)<br>* Fig. 1-3 *<br>-- | 1 | | |
| A | DE - A1 - 3 344 709 (DAIMLER-BENZ)<br>* Fig. 1 *<br>---- | 1 | | |
| | | | **RECHERCHIERTE SACHGEBIETE (Int. Cl.4)** | |
| | | | B 21 J 15/00<br>B 23 K 26/00 | |

Der vorliegende Recherchenbericht wurde für alle Patentansprüche erstellt.

| Recherchenort | Abschlußdatum der Recherche | Prüfer |
|---|---|---|
| WIEN | 17-02-1988 | DRNOWITZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82